Europäisches Patentamt

European Patent Office

Office européen des brevets

(19)

(11) Publication number: **0 106 437**
**B1**

(12) EUROPEAN PATENT SPECIFICATION

(45) Date of publication of patent specification: **09.09.87**

(51) Int. Cl.⁴: **G 01 B 5/02**

(21) Application number: **83304431.6**

(22) Date of filing: **01.08.83**

(54) Measuring machine.

<table>
<tr><td>

(30) Priority: **14.09.82 JP 158880/82**

(43) Date of publication of application:
**25.04.84 Bulletin 84/17**

(45) Publication of the grant of the patent:
**09.09.87 Bulletin 87/37**

(84) Designated Contracting States:
**CH DE FR GB IT LI**

(56) References cited:
**EP-A-0 044 823**
**US-A-4 080 740**

</td><td>

(73) Proprietor: **Katayama, Takao**
**No. 21-2, 2-chome, Chuo Ohta-ku**
**Tokyo (JP)**

(72) Inventor: **Katayama, Takao**
**No. 21-2, 2-chome, Chuo Ohta-ku**
**Tokyo (JP)**

(74) Representative: **Evans, David Charles et al**
**F.J. CLEVELAND & COMPANY 40-43, Chancery**
**Lane**
**London, WC2A 1JQ (GB)**

</td></tr>
</table>

Courier Press, Leamington Spa, England.

## Description

The present invention relates to a measuring apparatus, and more particularly to a measuring machine for measuring length, thickness, width or the like of an object to be measured.

In a conventional measuring machine for use in measuring dimensions, such as a micrometer, or a dial gauge, the machine is used to measure precisely an object having a relatively large dimension. Such a measuring machine is, generally, provided with a stationary measuring contact point and a movable measuring contact point positioned so as to be opposite to the stationary contact point. In the case of a micrometer, the movable contact point is a sliding member in the form of a spindle and a guiding member serves to guide the spindle over its range of movements in a measuring operation.

In a conventional measuring machine of the dial-gauge type, the sliding member is conveyed toward the stationary measuring contact point in order to measure the dimension of the object. The sliding member is conveyed along with the guiding member, which latter is generally provided with rollers, positioned to both end portions of the guiding member.

Thus, in conventional measuring machines, a clearance is provided between the sliding member and a bearing unit in order to permit sliding movement of the sliding member in use. As a result of the presence of clearance, the sliding member is capable of limited lost motion with respect to the guiding member, and when measuring to a high degree of accuracy, reproducable measuring values cannot be obtained.

Furthermore, sliding friction may act on the spindle to decrease the smoothness of forward and rearward movements of the spindle and, therefore, a relatively large amount of actuating force is necessary because of said sliding friction.

It is, accordingly, an object of the present invention to provide an improved measuring apparatus which can measure more precisely a relatively large object to be measured.

In EP—A—0,044,823 there is described a measuring apparatus comprising a base, a housing having a defined longitudinal axis sensing means for sensing a dimension of an object to be measured and including a stationary sensing contact point secured to said base, a movable sensing contact point and a sliding member carrying said movable sensing contact point and movable longitudinally relative to said housing displacement measuring means for measuring the displacement of said sliding member so as to measure a dimension of said object; guide means for guiding said sliding member and actuating means for moving said sliding member so as to cause said movable sensing contact point to contact said object.

The present invention comprises apparatus as defined in the previous paragraph characterized in that the guide means comprises a plurality of linear bearings each comprising a plurality of rollers, each of which is arranged to be orthogonal or approximately orthogonal with respect to adjacent rollers, and in that the actuating means includes means to move the sliding member axially away from the stationary sensing contact point aginst a spring bias which biases the sliding member toward the stationary sensing contact point so as to allow introduction of said object between said contact points and effect a measurement.

According to one feature of the present invention, therefore, some of the above described disadvantages in the prior art are avoided by using a linear bearing of the crossed roller type as supporting means for a spindle. Thus, in the measuring apparatus of the present invention, since the spindle is protected against unwanted lateral and rotational displacement, vibration of the spindle is eliminated so as to obtain rectilinear motion of the spindle and, therefore, high measuring precision.

Further, since the frictional resistance acting on the spindle is small, only a small operating force is required, because the motion of the spindle is smoothly effected by the guide means.

Using the measuring apparatus of the present invention, it is now possible to measure a dimension under a scale pressure of about 10 grams.

Following is a description by way of example only and with reference to the accompanying drawings of methods of carrying the invention into effect.

In the drawings:—

Figure 1 is a plan view of a measuring apparatus of the present invention.

Figure 2 is a vertical sectional view of the measuring apparatus of the present invention taken along line II—II of Figure 1.

Figure 3 is a vertical sectional view of the measuring apparatus of the present invention taken along line III—III of Figure 1.

Figure 4 is an enlarged sectional view of a main portion of Figure 3.

Figure 5 is a perspective view of a bearing unit employed in a measuring apparatus of the present invention.

Referring to the drawings in greater detail, there is shown a measuring apparatus which comprises a housing 10, a measuring member 12 for measuring a dimension of an object to be measured, a scaling member 14 for scaling the dimension of the object to be measured, a guiding member 16 for guiding a measuring motion of the measuring member 12, a supporting member 18 for supporting the measuring member 12 on the housing 10, and an actuating member 20 for actuating the measuring member 12 to measure the object to be measured.

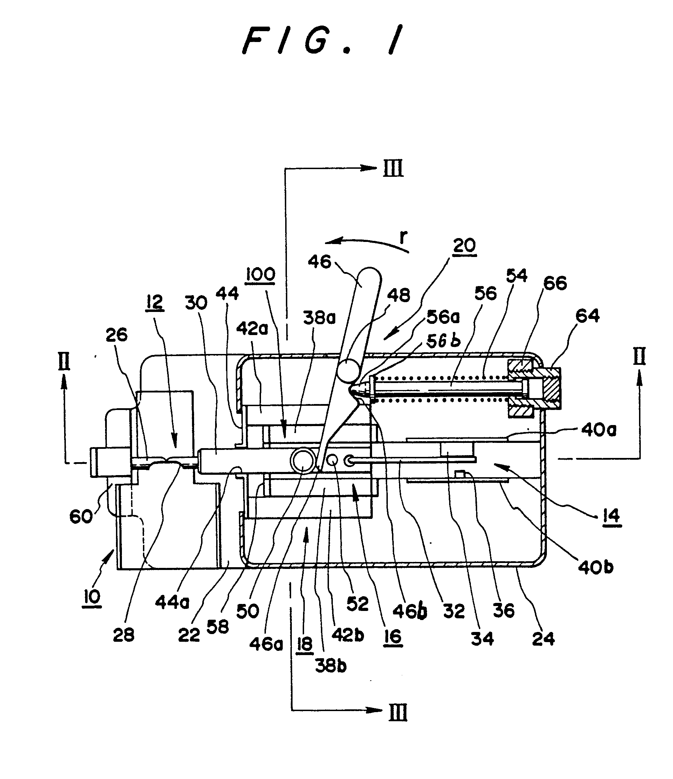

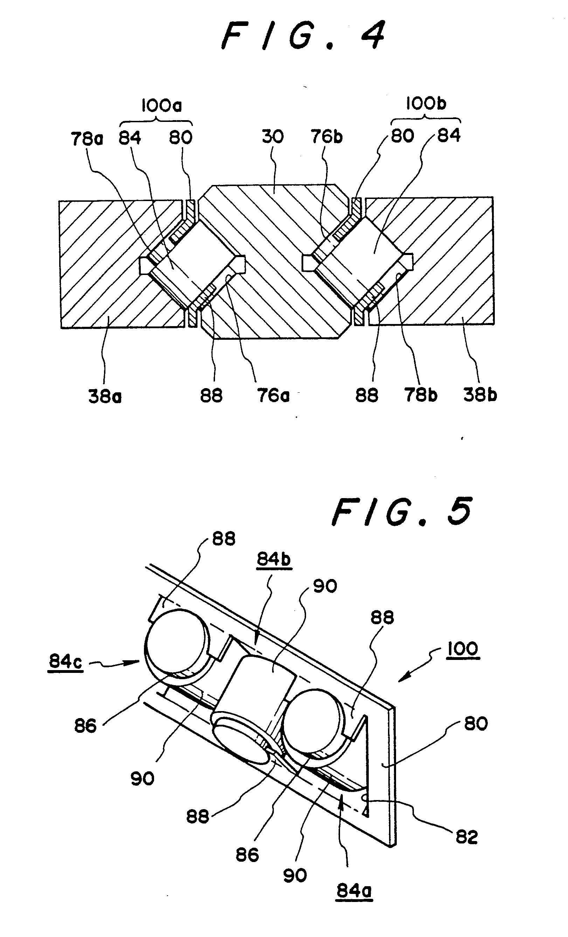

As is shown in Figures 1 to 3, the housing 10 is provided with a base 22 and a casing 24 mounted on the base 22. The measuring member 12 comprises a stationary measuring contact point 26, a movable measuring contact point 28, a sliding member in the form of a spindle 30 carrying the movable contact point 26 and a scale in the form of a glass scale plate 32 which is fastened to the spindle 30. The reading member 14 comprises a read sensor 34 and a light source 36. The guiding member 16 comprises a pair of bearing units 100a and 100b (Fig. 4), and a pair of guide plates 38a and 38b. The supporting member 18 comprises supporting plates 42a and 42b and a disc-plate 44 having an aperture 44a. The actuating member 20 comprises an actuating lever 46 of which a centre portion is pivotably mounted on the casing 24 by a pin 48 and an actuating rod 56 engaging with the actuating lever 46.

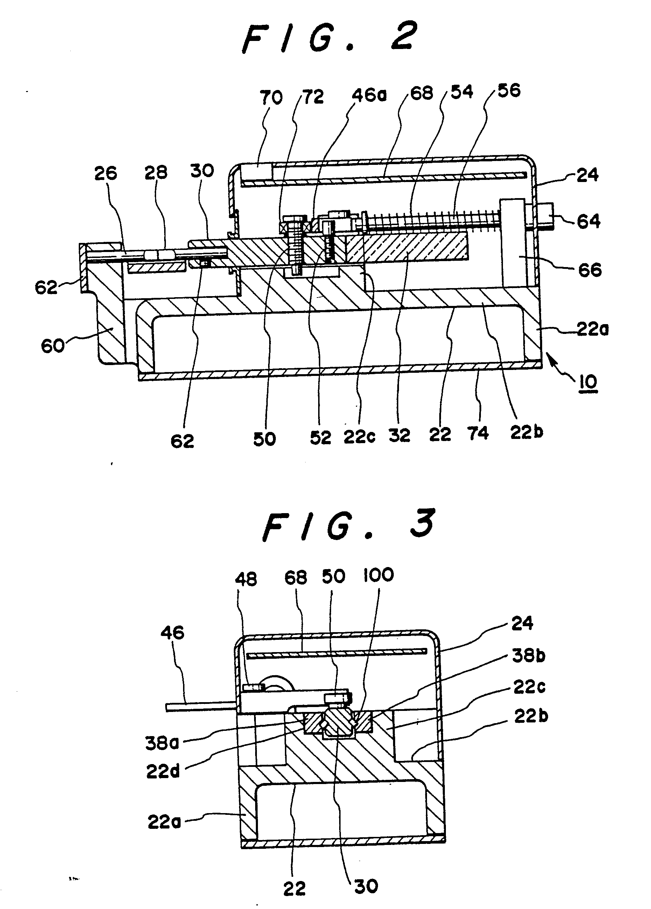

As is shown in Figures 2 and 3, the base 22 is formed with a rectangular upstanding portion 22a, a flat portion 22b integrally formed with the upstanding portion 22a, and a cuboid-shaped projection 22c. As is shown in Figures 1 and 2, the stationary measuring contact point 26 is fixed to a front portion of the base 22 by a bracket 60. The movable measuring contact point 28 is inserted into an end portion of the spindle 30 such that an end of the movable measuring contact point 28 is opposed to an end of the stationary measuring contact point 66. The movable measuring contact point 28 is fastened to the spindle 30 by a fastening screw 62. An end portion of the glass scale plate 32 is secured to the other end portion of the spindle 30.

The read sensor 34 of the scaling member 14 is mounted on a fastening frame 40a which is secured to the casing 24. The light source 36 is secured on a fastening frame 40b which is also secured to the casing 24 so as to be opposed to the fastening frame 40a and spaced apart therefrom.

The bearing units 100a and 100b of the guiding member 16 is positioned at both sides of the spindle 30. As is shown in Figures 1, 3 and 4, the bearing unit 100a is located between the spindle 30 and the guiding bar 38a. The bearing unit 100b is located between the spindle 30 and the guiding bar 38b. The guiding bars 38a and 38b are located between projections 42a and 42b. The mounting bars 42a and 42b of the supporting member 18 are fastened to the casing 24 by way of the disc-plate 44.

A centre portion of the actuating lever 46 of the actuating member 20 is pivotably mounted on the casing 24 by means of the pin 48. A pair of actuating pins in the form of screws 50 and 52 are provided on the spindle 30 of the measuring member 12 spaced apart at a predetermined distance from each other. An end portion 46a of the actuating lever 46 contacts with the screws 50 or 52 by operating the actuating lever 46. A base portion of the actuating rod 56 is inserted into a plug 64 which is mounted on the casing 24. The actuating rod 56 is inserted into a compression coil spring 54 of which end portion contacts with a flange 56b of the actuating rod 56 and other end portion contacts with the plug 64. Accordingly, an end portion 56a of the actuating rod 56 is engaged with a recess 46b of the actuating lever 46. The spindle 30 is movably supported on the base 22 by the bearing units 100a and 100b and the fixed guide bars 42a and 42b by way of the casing 24.

The bearing units are so called a linear bearing device of a crossed roller type which is described in Japanese Patent Specification No. 1,102,253.

As is best shown in Figures 3 and 4, the bearing units 100a and 100b are arranged at both sides of the spindle 30. The both sides of the spindle 30 are provided with longitudinal slots 76a and 76b. The longitudinal slot 76a is provided on one side surface of the spindle 30 and the longitudinal slot 76b is provided on the other side surface of the spindle 30. The guide bar 38a is provided with a longitudinal rectangular slot 78a which is provided on a longitudinal side surface. One longitudinal quadrangular slot is formed with the slot 76a of the spindle 30 and the slot 78a of the guide bar 38a. The bearing unit 100a is arranged in the quadrangular slot. A longitudinal rectangular slot 76b is provided on the other side surface of the spindle 30. A longitudinal rectangular slot 78b is provided on the side surface of the guide bar 38b. Another longitudinal quadrangular slot is formed with the slots 76b and 78b, where the bearing unit 100b is arranged therein.

The bearing units 100a and 100b include roller means 84 and a supporting frame 80.

As is best shown in Figure 5, each of the bearing units 100a and 100b includes a supporting frame 80 having a quadrangular aperture 82 and roller means 84 including a plurality of tubular rollers 84a, 84b and 84c. The number of the rollers can be altered as it is demand. One of the rollers is positioned so as to be orthogonally directed with respect to other adjacent rollers.

In more detail, a pair of supporting brackets 88 are provided at the supporting frame 80 of which one frame 80 is opposed to the other. A plurality of pairs of the supporting brackets 88 is arranged on the suporting frame 80 spaced apart at a predetermined distance. Each of cylindrical shafts 86 is supported by the supporting bracket 88. Each of tubular roles 90 is rotatably mounted on the supporting brackets and is formed integrally with shaft 86.

As described above, the stationary measuring contact point 26 is mounted on the base 22 of the housing 10. The movable measuring contact point 28 is secured to the end portion of the spindle 30 so as to be opposed to the stationary measuring contact point 26 and in an axial line therewith. The spindle 30 is supported and positioned between the pair of guide bars 38a and 38b which are carried by the base 22 by way of the bearing units 100a and 100b. Measurement of an object can be performed by putting the object between the stationary measuring contact point 26 and the movable measuring contact point 28. The glass scale plate 32 is fastened to the rear portion of the spindle 30. The read sensor 34 is positioned to be opposed to one side of the glass scale plate 32. The measured value is read by the read sensor 34 in accordance with the moving value of the glass scale plate 32. The measured value is converted to an electrical value and thereafter is displayed by a digital display 70 (Fig. 2).

The end portion 46a of the actuating lever 46 is located between the forward pressing pin 50 and the backward pressing in 52. The end portion 56a of the pressing rod 56 is contacted with the actuating lever 46 by the reaction force of the coil spring 54. Accordingly, the end portion of the movable measuring contact point 28 usually contacts with the stationary measuring contact point 26.

When the actuating lever 46 is rotated counterclockwise as is shown by an arrow r of Figure 1, the movable measuring contact point is moved toward the longitudinal and backward direction together with the spindle 30 the object to be measured may be put between the contact points 26 and 28.

According to the present invention, a spindle supporting a movable measuring contact point is supported by a linear bearing unit of cross roller type and is restricted by the linear bearing unit.

The rectilinear propagating motion of the contact point is stabilised without any generation of vibration against the upper and lower direction force and the rotating force. Further, the friction resistance acting on the spindle is small in spite that the compressing force is applied to the bearing unit. The smoothing motion of the contact point can be performed and thereby the force for moving the spindle is decreased. Moreover, the vibration of the spindle is prevented since the gap or clearance in the bearing unit is completely eliminated and therefore, the error of the measuring precision is eliminated as well as the endurance is enhanced.

In view of the above, it will be seen that the several objects of the invention are achieved and other advantages are attained.

**Claims**

1. A measuring apparatus comprising a base (22), a housing (10) having a defined longitudinal axis, sensing means (12) for sensing a dimension of an object to be measured and including a stationary sensing contact point (26) secured to said base (22), a movable sensing contact point (28) and a sliding member (30) carrying said movable sensing contact point and movable longitudinally relative to said housing, displacement measuring means (34, 36) for measuring the displacement of said sliding member so as to measure a dimension of said object; guide means (100) for guiding said sliding member (30) and actuating means (46, 54, 56) for moving said sliding member (30) so as to cause said movable sensing contact point to contact said object; characterized in that the guide means (100) comprises a plurality of linear bearings (84), each comprising a plurality of rollers (86), each of which is arranged to be orthogonal or approximately orthogonal with respect to adjacent rollers (86), and in that the actuating means includes means (46) to move the sliding member (30) axially away from the stationary sensing contact point (26) against a spring bias (54) which biases the sliding member (30) toward the stationary sensing contact point (26) so as to allow introduction of said object between said contact points and effect a measurement.

2. An apparatus as claimed in claim 1 characterized in that said linear bearings (84) further comprise a supporting frame (80) for supporting said rollers (86) and a guide bar (38a, 38b) contacting said rollers and secured to said base (22) of the housing (24).

3. An apparatus as claimed in claim 2 characterized in that said supporting frame (80) comprises an aperture (82) and a plurality of pairs of supporting brackets (88) arranged on said supporting frame (80) spaced apart at a predetermined distance, each of said rollers (86) comprising a cylindrical shaft supported by said supporting bracket.

4. An apparatus as claimed in any preceding claim, characterized in that said sliding member (30) of the sensing means (12) comprises a spindle movable longitudinally along its axis and carrying said movable measuring contact point (28), in that said means for moving the sliding member (30) comprises an actuating lever (46) for moving said sliding member (30) in an axial direction and that said displacement measuring means (34, 36) comprises a scale plate (32) carried by said sliding member (30) and an indicating sensor (34) for reading the value of said scale plate.

5. Apparatus as claimed in claim 4 characterized in that sliding member (30) has a longitudinal slot (76a, 76b), in that said respective guide bars (38a, 38b) each have a co-operating longitudinal slot (78a, 78b), and in that said linear bearings (84) are positioned between said slot (76a, 76b) of the sliding member (30) and said respective slot (78a, 78b) of the guide bar (38a, 38b).

**Patentansprüche**

1. Meßmaschine, umfassend eine Basis (22), ein Gehäuse (10) mit einer definierten Längsachse, Fühler (12) zum Erfassen einer Dimension eines Meßgegenstands mit einem ortsfesten Meßkontaktpunkt (26), der an der Basis (22) befestigt ist, einen beweglichen Meßkontaktpunkt (28) und einem Schieber (30), der den beweglichen Meßkontaktpunkt trägt und relativ zum Gehäuse längsverschiebbar ist, Verschiebungs-Meßorgane (34, 36), die die Verschiebung des Schiebers messen und damit eine Dimension des Meßgegenstands bestimmen; Führungen (100), die den Schieber (30) führen, und Betätigungsmittel (46, 54, 56), die den Schieber (30) bewegen, so daß der bewegliche Meßkontaktpunkt den Meßgegenstand kontaktiert; dadurch gekennzeichnet, daß die Führungen (100) mehrere lineare Lager (84) umfassen, deren jedes mehrere Rollen (86) aufweist, die jeweils so angeordnet sind, daß sie in bezug auf angrenzende Rollen (86) orthogonal bzw. angenähert orthogonal sind, und daß die Betätigungsmittel ein Organ (46) aufweisen, das den Schieber (30) in Axialrichtung vom ortsfesten Meßkontaktpunkt (26) wegbewegt gegen eine Vorspannfeder (54), die den Schieber (30) in Richtung zum ortsfesten Meßkontaktpunkt (26) vorspannt, so daß der Meßgegenstand zwischen die Meßkontaktpunkte einführbar und eine Messung durchführbar ist.

2. Meßmaschine nach Anspruch 1, dadurch gekennzeichnet, daß die linearen Lager (84) ferner einen Stützrahmen (80) zur Abstützung der Rollen (86) und eine die Rollen kontaktierende und an der Basis (22) des Gehäuses (24) befestigte Leitstange (38a, 38b) umfassen.

3. Meßmaschine nach Anspruch 2, dadurch gekennzeichnet, daß der Stützrahmen (80) eine Öffnung (82) sowie mehrere Paare von Stützbügeln (88) aufweist, die am Stützrahmen (80) in vorbestimmtem Abstand voneinander angeordnet sind, wobei jede Rolle (86) einen von dem Stützbügel abgestützten zylindrischen Schaft aufweist.

4. Meßmaschine nach einem der vorhergehenden Ansprüche, dadurch gekennzeichnet, daß der Scheiber (30) und die Abtastmittel (12) eine Spindel aufweisen, die in Längsrichtung entlang ihrer Achse bewegbar ist und den beweglichen Meßkontaktpunkt (28) trägt, daß die Mittel zum Bewegen des Schiebers (30) einen Betätigungshebel (46) zum Bewegen des Schiebers (30) in einer Axialrichtung aufweisen, und daß die Verschiebungs-Meßorgane (34, 36) eine von dem Schieber (30) getragene Maßplatte (32) sowie einen Anzeigefühler (34) zum Ablesen des Werts der Maßplatte aufweisen.

5. Meßmaschine nach Anspruch 4, dadurch gekennzeichnet, daß der Schieber (30) einen Längsschlitz (76a, 76b) hat, daß die jeweiligen Leitstangen (38a, 38b) jeweils einen damit zusammenwirkenden Längsschlitz (78a, 78b) aufweisen, und daß die linearen Lager (84) zwischen dem Schlitz (76a, 76b) des Schiebers (30) und dem entsprechenden Schlitz (78a, 78b) der Leitstange (38a, 38b) positioniert sind.

## Revendications

1. Un appareil à mesurer comprenant une base (22), une enveloppe (10) ayant un axe longitudinal défini, des moyens de détection (12) pour détecter une dimension d'un objet à mesurer et comprenant une pointe de contact de détection fixe (26) fixée à la base (22), une pointe de contact de détection mobile (28) e un élément coulissant (30) portant la pointe de contacte de détection mobile et pouvant se mouvoir longitudinalement par rapport à l'enveloppe, des moyens de mesure de déplacement (34, 36) pour mesurer le déplacement de l'élément coulissant de manière à mesurer une dimension de l'objet; des moyens de guidage (100) pour guider l'élément coulissant (30) et des moyens d'actionnement (46, 54, 56) pour déplacer l'élément coulissant (30) de manière à faire en sorte que la pointe de contact de détection mobile touche l'objet, caractérisé en ce que les moyens de guidage (100) comprennent plusieurs paliers linéaires (84) comportant chacun plusieurs galets (86) dont chacun est disposé de manière à être orthogonal ou approximativement orthogonal par rapport à des galets adjacents (86), et que les moyens d'actionnement comprennent des moyens (46) pour déplacer axialement l'élément coulissant (30) en l'éloignant de la pointe de contact de détection fixe (26), contre une sollicitation de ressort (54) qui sollicite l'élément coulissant (30) vers la pointe de contact de détection fixe (26) de manière à permettre l'introduction de l'objet entre les pointes de contact et à effectuer une mesure.

2. Un appareil selon la revendication 1, caractérisé en ce que les paliers linéaires (84) comprennent en outre une monture support (80) pour supporter les galets (86) et une barre de guidage (38a, 38b) entrant en contact avec les galets et fixée à la base (22) de l'enveloppe (24).

3. Un appareil selon la revendication 2, caractérisé en ce que la monture support (80) comprend une ouverture (82) et plusieurs paires de supports (88) disposées sur la monture support (80), espacées d'une distance prédéterminée, chacun des galets (86) comprenant un arbre cylindrique supporté par le support.

4. Un appareil selon l'une quelconque des revendications précédentes, caractérisé en ce que l'élément coulissant (30) des moyens de détection (12) comprend un broche mobile longitudinalement le long de son axe et portant la pointe de contact de mesure mobile, en ce que le moyen servant à déplacer l'élément coulissant (30) comprend un levier d'actionnement (46) pour déplacer cet élément coulissant (30) dans un direction axiale et que le moyen de mesure de déplacement (34, 36) comprend une plaque d'échelle (32) portée par l'élément coulissant (30) et un capteur d'indication (34) pour lire la valeur de la plaque d'échelle.

5. Appareil comme revendiqué à la revendication 4, caractérisé en ce que le l'élément coulissant (30) a une fente longitudinale (76a, 76b), que les barres de guidage respectives (38a, 38b) ont chacune une fente longitudinale coopérante (78a, 78b) et que les paliers linéaires (84) sont placés entre la fente (76a, 76b) de l'élément coulissant (30) et la fente respective (78a, 78b) de la barre de guidage (38a, 38b).

# F I G . 1

# F I G . 2

# F I G . 3

# FIG. 4

# FIG. 5